# EUROPEAN PATENT APPLICATION

(11) **EP 1 629 933 A2**
(43) Date of publication of application: **01.03.2006**
(21) Application number: 05017984.5
(22) Date of filing: 18.08.2005
(51) Int. Cl.: B23K 26/08

(54) **Laser processing apparatus**

(30) Priority: 23.08.2004 JP 2004242648
(71) Applicant: FANUC LTD, Minamitsuru-gun, Yamanashi 401-0597 (JP)
(72) Inventor: Otsuka, Kazuhisa, FANUC Manshonharimoni, Minamitsuru-gun Yamanashi 401-0511 (JP); Furuya, Yoshitake, FANUC Manshonharimoni, Minamitsuru-gun Yamanashi 401-0511 (JP)
(74) Representative: Schmidt, Steffen J.

(57) **Abstract**

A laser processing apparatus includes a six-axis robot operating by robot axes controlled by a robot control device and a processing tool mounted on the end of the arm of the robot. A processing head is provided on a horizontal movement mechanism provided on a horizontal movement mechanism support base, which is in turn supported by a carrier able to move on a vertical movement mechanism. The vertical movement mechanism and the horizontal movement mechanism are driven by additional axes controlled by the robot control device. In a non-processing section of the workpiece etc., only the additional axes are operated to move the processing head at a high speed and shorten the cycle time. When operating the additional axes to move, the data of the relative position of the control point (tool end point) with respect to a fixed point on the arm forward end is corrected each time.

## Description

### BACKGROUND OF THE INVENTION

### 1. Field of the Invention

The present invention relates to a laser processing apparatus, and more particularly to a laser processing apparatus having a processing tool mounted at the forward end of an arm of a robot for laser processing.

### 2. Description of the Related Art

In recent years, technology mounting a processing tool comprised of a laser processing head (hereinafter simply also referred to as a "processing head") on the end of an arm of a robot for laser processing has been growing in fields of application. It draws attention, for example, as processing technology for taking the place of spot welding technology etc., in mainly the automotive industry. However, laser processing apparatuses are relatively expensive compared with spot welding machines etc., and therefore, for them to take the place of other conventional processing apparatuses, it is desirable to improve the processing efficiency by shortening the cycle time.

One of the important factors for shortening the cycle time more is the speed of movement of the processing head. In the prior art, a processing head was attached to the end of an arm of the robot as a working tool, and the laser processing and the operation for movement of the processing head were performed in accordance with a processing sequence. Therefore, the position of movement of the processing head ends up being determined by the position of the tool end point constituting the position of the control point of the robot axis. To raise the speed of movement of the processing head, the robot has to be moved at a high speed. However, in general, movement of a robot by a robot axial operation is accompanied with movement of an arm having a large inertia. Therefore, it is difficult to increase the speed of the robot movement. This contributes to the inhibition of the streamlining of the cycle time.

For example, when the distance of movement at a non-processing time such as a so-called "air cut" is long, the proportion of the time required for that in the cycle time becomes longer. In other words, the ratio of the "time when the laser beam is output and the laser processing is actually performed" in the cycle time becomes lower and the processing efficiency becomes lower. However, no known publication can be found disclosing technology for simply solving the problem derived from the fact that the speed of movement of the laser processing head ends up being determined by the speed of movement of the robot.

### SUMMARY OF THE INVENTION

Accordingly, it is a basic object of the present invention to solve the above-mentioned problems in a laser processing apparatus. That is, it is an object of the present invention to provide a laser processing apparatus comprised of a robot having a processing tool mounted on the end of an arm thereof for laser processing, wherein high speed movement of a laser processing head is facilitated when no processing is being performed so as to shorten the cycle time and thereby improve the processing efficiency.

The present invention provides a processing head able to be moved by operation of additional axes of a robot on a processing tool so as to shorten the time of movement of the processing head at the time when no processing is being performed. More specifically, the present invention provides a laser processing apparatus including a robot having robot axes and at least one additional axis, a processing tool mounted on a forward end of an arm of the robot, and a controlling means for controlling the robot and the processing tool based on software processing, wherein the processing tool has a laser processing head able to be moved by the at least one additional axis, and the controlling means includes means for operating only the robot axes based on a program so as to control the movement of the laser processing head during processing and means for operating the at least one additional axis or both the at least one additional axis and the robot axes based on the program so as to control the movement of the laser processing head in a non-processing section.

This makes it easy to move the laser processing head at a high speed in the state where the robot axes are stopped to bring the robot arm to a rest (state where tool end point is at rest).

Here, the at least one additional axis may include an axis using a linear motor as a drive source for moving the laser processing head. In this case, the operation of the linear motor makes it easy to move the laser processing head at a high speed in a straight line while the robot arm is at rest.

Further, the laser processing apparatus may further include a means for changing robot control point definition data before execution of the next processing when operation of the at least one additional axis results in a change in the relative position of the laser processing head with respect to an end effector mounting surface of the forward end of the arm of the robot. In this case, when performing laser processing by executing a processing program defining a processing sequence, the change in the positional relationship between the control point (tool end point) of the robot and processing point (laser irradiation point) before and after movement of the processing head by the additional axes is compensated for, and deviation between a processing point designed by the processing program and the actual processing point is avoided.

According to the present invention, the ratio of the laser output time in the cycle time of the laser processing can be longer to improve the processing efficiency of the laser processing system. Further, this can contribute to reduction of the cost of products.

### BRIEF DESCRIPTION OF THE DRAWINGS

These and other objects, features, and advantages of the present invention will be described in more detail below based on the preferred embodiments of the present invention with reference to the accompanying drawings, in which:
FIG. 1 is a view showing the principal configuration of a laser processing apparatus according to an embodiment of the present invention; and
FIG. 2 is a flow chart summarizing the processing executed by the laser processing apparatus of the present invention at the time of execution of a processing program.

### DETAILED DESCRIPTION

Embodiments of the present invention will be described below with reference to the drawings.

In the following explanation, the term "#n" should be understood as indicating the n-th axis of the robot controlled by the robot control device through the servo controllers for the different axes.

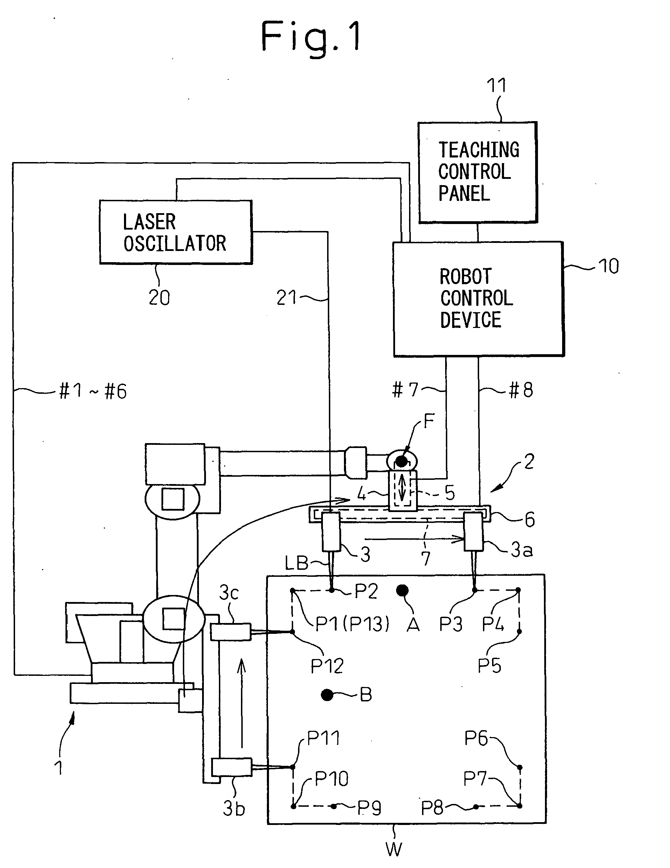

FIG. 1 is a view showing the principal configuration of a laser processing apparatus according to an embodiment of the present invention. Referring to FIG. 1, a robot control device 10 functions as the means for controlling the system as a whole and is provided with a central processing unit (main CPU, hereinafter referred to simply as "CPU"). The CPU is connected through buses to a memory comprised of a RAM and ROM, a teaching control panel interface connected to a teaching control panel 11, a laser apparatus input/output interface connected to a laser oscillator 20, a servo controller for controlling the servo motors for driving the axes #1 to #6 of the robot 1, and a servo controller for controlling the servo motors for driving the additional axes #7 and #8. Note that the internal configuration of this robot control device itself is well-known, so illustration and detailed descriptions of the individual components are omitted.

The six-axis robot 1 is provided with robot axes #1 to #6 controlled by the robot control device 10 and is operated by driving the robot axes #1 to #6. The forward end of the arm of the six-axis robot 1 has a processing tool 2 mounted thereon. The processing tool 2 has a movement mechanism operating using at least one additional axis so as to enable the processing head 3 to move on the processing tool 2 itself. In this example, the movement mechanism of the processing tool 2 includes a vertical movement mechanism 5 and a horizontal movement mechanism 7. These movement mechanisms 5, 7 are driven by additional axes #7 and #8, respectively.

The vertical movement mechanism 5 is a mechanism mainly used for adjusting the position of the processing head 3 in the height direction (distance from processing surface) and makes a carrier 4 move in the Z-axis direction of the mechanical interface coordinate system (origin F) defined at the arm forward end. For the vertical movement mechanism 5, for example, a well-known mechanism combining a ball-screw mechanism and servo motor can be employed.

Further, the horizontal movement mechanism 7 is a mechanism mainly used for making the processing head 3 move at a high speed along the processing line and is provided on a horizontal movement mechanism support base 6 joined integrally with the carrier 4. Here, as the horizontal movement mechanism 7, a linear motor mechanism is employed. The processing head 3 provided with the processing nozzle having an irradiation port for the laser beam LB is mounted on a slider (not shown) of this linear motor mechanism.

The horizontal movement mechanism support base 6 extends in an X-axis direction (perpendicular to the Z-axis) of the mechanical interface coordinate system (origin F) and forms a T-shape together with the carrier 4. Therefore, when the horizontal movement mechanism (linear motor mechanism) 7 is operated by driving the additional axis #8, the processing head 3 moves in the X-axis direction of the mechanical interface coordinate system. Note that as the horizontal movement mechanism 7, instead of the linear motor mechanism, it is possible to employ a mechanism combining a ball-screw mechanism and servo motor.

The workpiece constituting an object processed by the laser processing is shown by reference character W. The laser beam output from the laser oscillator 20 is supplied through an optical fiber 21 to the processing head 3 and is emitted from the forward end of the processing nozzle of the processing head 3 toward the processing location of the workpiece W to thereby conduct laser processing. Control for turning the laser oscillator 20 on/off, adjusting the laser beam output, etc. is performed based on instructions from the robot control device 10.

Note that the robot 1 is set with not only the above-mentioned mechanical interface coordinate system, but also a base coordinate system and a tool coordinate system. The origin of the tool coordinate system is normally made a control point of the laser processing apparatus. In the processing program (described later), a processing path for the control point to follow is designated. The origin (control point) of the tool coordinate system is defined as the relative position with respect to the origin F of the mechanical interface coordinate system. This data is stored in advance in the memory of the robot control device 10. However, as described later, in the present invention, the position of the processing head 3 relative to the origin F changes due to movement caused by the operation of the additional axis, so correction becomes necessary for compensating for this. In FIG. 1, reference character A illustrates the origin position of the tool coordinate system when the processing head is at the position shown by reference numeral 3 or 3a, while reference character B illustrates the origin position of the tool coordinate system when the processing head is at the position shown by reference numeral 3b or 3c (note that when the robot axes #1 to #6 are operated, the tool coordinate system operates in the same way as the mechanical interface coordinate system). Note that illustration of the robot 1 when the processing head is at the position shown by reference numeral 3b or 3c is omitted.

The teaching of the robot 1, the setting of the coordinates for the additional axes, etc. are performed using the teaching control panel 11 provided with an LCD screen. Further, the teaching control panel 11 is provided with a jog function for manually operating the robot axes #1 to #6 and a function for manual axial feed of the additional axes #7 and #8. For example, while the robot 1 is stopped, it is possible to manually operate the vertical movement mechanism 5 to adjust the distance between the processing head 3 and the workpiece W or manually operate the horizontal movement mechanism 7 to adjust the position of the processing head 3 in the horizontal direction above the workpiece W.

The memory of the robot control device 10 stores programs for the robot 1, related setting data, and programs corresponding to movement instructions for the additional axes and laser processing instructions. Here, the robot 1 is provided with additional axes #7 and #8 in addition to the robot axes #1 to #6. Corresponding to this, the program for outputting operating instructions for these axes is comprised of a first program for controlling the six axes #1 to #6 and a second program for controlling the additional axes #7 and #8. These are executed in parallel by the software processing functions (multitask functions) of the robot control device.

In the laser processing apparatus according to the present invention, the processing program may also be prepared by a so-called playback system or off line programming system. In the former case, the manual feed function of the above-mentioned teaching control panel 11 is used to manually operate the robot 1 (robot axes #1 to #6) and the additional axes (#7 and #8) to make the processing head 3 successively move to the positions corresponding to the processing positions, and the positions are stored as teaching points so as to teach the processing path. Further, the type of movement between the teaching points (straight movement, arc movement, axial movement, etc.), speed of movement, positioning ratio, and other conditions, the parameters designating the laser output conditions (laser beam output power etc.), on/off instructions of laser irradiation, etc. are added to prepare the processing programs.

In off line programming, a work cell simulating the actual system by a three-dimensional model is defined on the off line programming system, the teaching points and processing path are determined in the work cell, and the type of movement between the teaching points (straight movement, arc movement, axial movement, etc.), speed of movement, positioning ratio, and other conditions, the parameters designating the laser output conditions (laser beam output power etc.), on/off instructions of laser irradiation, etc. are added to prepare the processing programs.

Here, as an example, assume the processing path is as shown in FIG. 1. That is, the processing path is constituted by paths along P1->P2 (laser irradiation on), P2->P3 (laser irradiation off), P3->P4 (laser irradiation on), P4->P5 (laser irradiation on), P5->P6 (laser irradiation off), P6->P7 (laser irradiation on), P7->P8 (laser irradiation on), P8->P9 (laser irradiation off), P9->P10 (laser irradiation on), P10->P11 (laser irradiation on), P11->P12 (laser irradiation off), and P12->P13 (laser irradiation on). Thus, the processing path from the start point P1 to the end point P13 (=P1) of the processing path includes processing sections (P1->P2, P3->P4, P4->P5, P6->P7, P7->P8, P9->P10, P10->P11, and P12->P13) and non-processing sections (P5->P6, P8->P9, and P12->P13). Further, the points P4, P7, and P10 form corner points.

To teach such a path of movement for preparing a processing program, for example, the following may be performed. Note that the robot 1 takes the posture shown in FIG. 1 and that the tool end point (control point of robot) is at the position shown by reference character A (point between P2 and P3) when the origin of the mechanical interface coordinate system is at the position shown by the reference character F. This position is expressed by Q (X0, Y0, Z0) in the mechanical interface coordinate system. Further, the "manual feed" is performed by operation of the teaching control panel 11.
(1) The additional axis #8 is manually operated in manual feed mode to position the processing head 3 at the left end of the horizontal movement mechanism support base 6 in FIG. 1 (#8 value = -z0) in the robot posture shown in FIG. 1. Further, the TCP definition data is corrected along with the additional axis movement. The correction method will be described later (same below).
(2) The robot axes are manually operated in manual feed mode to move the forward end of the processing nozzle at the position P1.
(3) The additional axis #7 is manually operated in manual feed mode to adjust the height of the processing nozzle, and the amount of height adjustment at the time of the completion of the height adjustment is stored. Further, the TCP definition data is corrected along with the additional axis movement.
(4) The robot position at the completion of the height adjustment (axial values of the axes #1 to #6) and the axial values of the additional axes #7 and #8 are stored.
(5) The robot axes are manually operated in manual feed mode to move the forward end of the processing nozzle at the position P2.
(6) The additional axis #7 is manually operated in manual feed mode to adjust the height of the processing nozzle. The amount of height adjustment may be made the amount of adjustment stored in the above step (3) and the additional axis #7 operated to move by exactly the same amount of adjustment (same below for height adjustment). Further, the TCP definition data is corrected along with the additional axis movement.
(7) The robot position at the completion of the height adjustment (axial values of axes #1 to #6) and the axial values of the additional axes #7 and #8 are stored. Further, the TCP definition data at that time is stored.
(8) The additional axis #8 is manually operated in manual feed mode to move the processing head 3 at a position right above the position P3. Further, the TCP definition data is corrected along with the additional axis movement.
(9) The robot axes are manually operated in manual feed mode to move the forward end of the processing nozzle at the position P3.
(10) The additional axis #7 is manually operated in manual feed mode to adjust the height of the processing nozzle. Further, the TCP definition data is corrected along with the additional axis movement.
(11) The robot position at the completion of the height adjustment (values of axes #1 to #6) and the axial values of the additional axes #7 and #8 are stored. Further, the TCP definition data at that time is stored.
(12) The robot axes are manually operated in manual feed mode to move the forward end of the processing nozzle at the position P4. Further, the posture of the robot at that time is changed from the posture at the position P3 to a posture rotated counterclockwise by 90 degrees as seen from above the workpiece W. This is intended to prepare for movement performed again in the section P5-P6 by the additional axis.
(13) The additional axis #7 is manually operated in manual feed mode to adjust the height of the processing nozzle. Further, the TCP definition data is corrected along with the additional axis movement.
(14) The robot position at the completion of the height adjustment (position of TCP and axial values of axes #1 to #6) and the axial values of the additional axes #7 and #8 are stored. Further, the TCP definition data at that time is stored.
(15) The robot axes are manually operated in manual feed mode to move the forward end of the processing nozzle at the position P5.
(16) The additional axis #7 is manually operated in manual feed mode to adjust the height of the processing nozzle. Further, the TCP definition data is corrected along with the additional axis movement.
(17) The robot position at the completion of the height adjustment (position of TCP and axial values of axes #1 to #6) and the axial values of the additional axes #7 and #8 are stored. Further, the TCP definition data at that time is stored.
(18) The additional axis #8 is manually operated in manual feed mode to move the processing head 3 at a position right above the position P6. Further, the TCP definition data is corrected along with the additional axis movement.
(19) The additional axis #7 is manually operated in manual feed mode to adjust the height of the processing nozzle.
(20) The robot position at the completion of the height adjustment (position of TCP and axial values of axes #1 to #6) and the axial values of the additional axes #7 and #8 are stored. Further, the TCP definition data at that time is stored.
(21) The robot axes are manually operated in manual feed mode to move the forward end of the processing nozzle at the position P7. Further, the posture of the robot at that time is changed from the posture at the position P6 to a posture rotated counterclockwise by 90 degrees as seen from above the workpiece W. This is intended to prepare for movement performed again in the section P8-P9 by the additional axis.
(22) The additional axis #7 is manually operated in manual feed mode to adjust the height of the processing nozzle. Further, the TCP definition data is corrected along with the additional axis movement.
(23) The robot position at the completion of the height adjustment (position of TCP and axial values of axes #1 to #6) and the axial values of the additional axes #7 and #8 are stored. Further, the TCP definition data at that time is stored.
(24) The robot axes are manually operated in manual feed mode to move the forward end of the processing nozzle at the position P8.
(25) The additional axis #7 is manually operated in manual feed mode to adjust the height of the processing nozzle. Further, the TCP definition data is corrected along with the additional axis movement.
(26) The robot position at the completion of the height adjustment (position of TCP and axial values of axes #1 to #6) and the axial values of the additional axes #7 and #8 are stored.
(27) The additional axis #8 is manually operated in manual feed mode to move the processing head 3 at a position right above the position P9. Further, the TCP definition data is corrected along with the additional axis movement.
(28) The additional axis #7 is manually operated in manual feed mode to adjust the height of the processing nozzle. Further, the TCP definition data is corrected along with the additional axis movement.
(29) The robot position at the completion of the height adjustment (position of TCP and axial values of axes #1 to #6) and the axial values of the additional axes #7 and #8 are stored.
(30) The robot axes are manually operated in manual feed mode to move the forward end of the processing nozzle at the position P10. Further, the posture of the robot at that time is changed from the posture at the position P6 to a posture rotated counterclockwise by 90 degrees as seen from above the workpiece W. This is intended to prepare for movement performed again in the section P11-P12 by the additional axis.
(31) The additional axis #7 is manually operated in manual feed mode to adjust the height of the processing nozzle.
(32) The robot position at the completion of the height adjustment (position of TCP and axial values of axes #1 to #6) and the axial values of the additional axes #7 and #8 are stored.
(33) The robot axes are manually operated in manual feed mode to move the forward end of the processing nozzle at the position P11.
(34) The additional axis #7 is manually operated in manual feed mode to adjust the height of the processing nozzle. Further, the TCP definition data is corrected along with the additional axis movement.
(35) The robot position at the completion of the height adjustment (position of TCP and axial values of axes #1 to #6) and the axial values of the additional axes #7 and #8 are stored.
(36) The additional axis #8 is manually operated in manual feed mode to move the processing head 3 at a position right above the position P12. Further, the TCP definition data is corrected along with the additional axis movement.
(37) The additional axis #7 is manually operated in manual feed mode to adjust the height of the processing nozzle. Further, the TCP definition data is corrected along with the additional axis movement.
(38) The robot position at the completion of the height adjustment (position of TCP and axial values of axes #1 to #6) and the axial values of the additional axes #7 and #8 are stored.
(39) The robot axes are manually operated in manual feed mode to move the forward end of the processing nozzle at the position P13.
(40) The additional axis #7 is manually operated in manual feed mode to adjust the height of the processing nozzle. Further, the TCP definition data is corrected along with the additional axis movement.
(41) The robot position at the completion of the height adjustment (position of TCP and axial values of axes #1 to #6) and the axial values of the additional axes #7 and #8 are stored.

After teaching the path of movement by the above routine, the type of movement between the teaching points (straight movement, arc movement, axial movement, etc.), speed of movement, positioning ratio, and other conditions, the parameters designating the laser output conditions (laser beam output power etc.), on/off instructions of laser irradiation, etc. are added to prepare the processing programs. Note that, in the non-processing sections (P5->P6, P8->P9, P12->P13) through which the processing head is passed in the off state of laser output, a high path precision is not required, so a command speed larger than that of the processing sections is designated. Due to this, a processing program is prepared so that in the sections requiring laser processing, accurate robot control point definition data (TCP definition data) is used for teaching, while in the sections not requiring path precision, the processing head is moved at a high speed.

Regarding movement of the processing head 3 performed by the additional axes, the robot control point definition data (TCP definition data) is corrected based on the following computations.

Suppose that the above-mentioned Q (X0, Y0, and Z0) is set as the initial value of the robot control point definition data (TCP definition data). Further, as will be understood from the above, movement performed by the two additional axes corresponds to movement along the X-axis direction and Z-axis direction in a mechanical interface coordinate system. If expressing this by ΔQ1 (ΔX1, ΔZ1), the TCP definition data after correction required for compensating for movement performed by these additional axes becomes Q1 (X0+ΔX1, Y0+ΔY1, Z0+ΔZ1). This corrected and redefined TCP definition data is utilized as the TCP definition data in the processing at the next step.

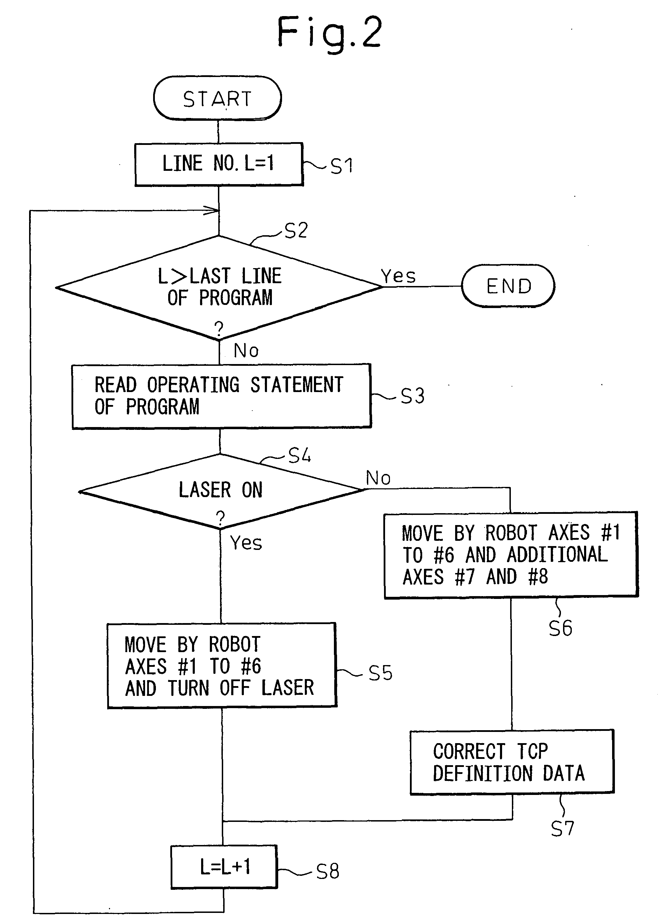

When preparing a processing program in this way, storing it in the memory of the robot control device 10, and inputting the execution command of this program from for example the teaching control panel 11, the processor of the robot control device 10 starts the processing of FIG. 2. The points of the steps are as follows:
Step S1: The indicator expressing the line number L of the program is initially set to "1" (cleared).
Step S2: It is checked whether or not the line number indicator L at that time indicates the last line. If yes, the processing is completed. If no, the routine proceeds to step S3.
Step S3: The operating statement indicated by the line number indicator L at that time is read.
Step S4: It is judged whether the instruction is a movement instruction turning the laser output on (processing section) or a movement instruction turning the laser output off (non-processing section). If the former, the routine proceeds to step S5, while if the latter, the routine proceeds to step S6.
Step S5: The robot axes #1 to #6 are operated to move the processing head 3 in the state with the laser output on. Note that after the completion of movement, the laser is turned off and the routine proceeds to step S8.
Step S6: The processing head 3 is moved by operating the additional axis #7 and/or #8 alone or operating the robot axes #1 to #6 in combination therewith. Note that the laser is kept off from the beginning to the end.
Step S7: The TCP definition data (stored at the time of teaching) corresponding to the robot position at that time (where at the positions P1 to P13) is used to correct the TCP definition data used for robot movement.
Step S8: The indicator of the line number L of the program is incremented by "1" and the routine then returns to step S2. After this, the above processing cycle is repeated until it is judged at step S2 that the line number L indicates the last line. In this way, the processing program is executed to complete the laser processing. Note that, if movement is performed by the additional axes, each time, the TCP definition data is corrected and the correct TCP definition data is used for robot control. Therefore, operation of the additional axes will never cause the processing path to deviate from that taught. Further, by combining operation of the additional axes with operation of the robot axes, the cycle time can be easily shortened compared with the case of movement performed only by the robot axes.

## Claims

1. A laser processing apparatus comprising a robot (1) having robot axes (#1 to #6) and at least one additional axis (#7, #8), a processing tool (2) mounted on a forward end of an arm of said robot (1), and a controlling means (10) for controlling said robot (1) and said processing tool (2) based on software processing, said laser processing apparatus **characterized in that**:
said processing tool (2) has a laser processing head (3) able to be moved by said at least one additional axis (#6, #7), and
said controlling means (10) comprises means for operating only said robot axes (#1 to #6) based on a program so as to control the movement of said laser processing head (3) during processing and means for operating said at least one additional axis (#7, #8) or both said at least one additional axis (#7, #8) and said robot axes (#1 to #6) based on the program so as to control the movement of said laser processing head (3) in a non-processing section.

2. The laser processing apparatus according to claim 1, wherein said at least one additional axis (#7, #8) includes an axis using a linear motor as a drive source for moving said laser processing head (3).

3. The laser processing apparatus according to claim 1, further comprising a means for changing robot control point definition data before execution of the next processing when operation of said at least one additional axis (#7, #8) results in a change in the relative position of said laser processing head (3) with respect to an end effector mounting surface of the forward end of said arm of said robot (1).
